# DEMANDE DE BREVET EUROPEEN

(11) **EP 4 393 774 A1**
(43) Date de publication de la demande: **03.07.2024**
(21) Numéro de dépôt: 23219105.6
(22) Date de dépôt: 21.12.2023
(51) Int. Cl.: B60Q 1/26, B60K 11/08

(54) **DISPOSITIF D'OBTURATION APTE À GÉNÉRER UNE FONCTION LUMINEUSE ET ENSEMBLE DE FACE AVANT COMPORTANT UN TEL DISPOSITIF**

(30) Priorité: 28.12.2022 FR 2214586
(71) Demandeur: VALEO SYSTEMES THERMIQUES, 78320 Le Mesnil Saint-Denis (FR)
(72) Inventeur: PAWANPRASAD, Vijendrakumar, 600130 Chennai (IN); VELASCO, Sebastien, 600130 Chennai (IN); ARAB, Karim, 78322 Le Mesnil-Saint-Denis Cedex (FR); MARION, Laura, 78322 Le Mesnil-Saint-Denis Cedex (FR); PIROCHE, Sebastien, 93012 Bobigny Cedex (FR)
(74) Mandataire: Valeo Systèmes Thermiques

(57) **Abrégé**

La présente invention a pour objet un dispositif d'obturation (4, 4a, 4b) pour un ensemble de face avant (1) destinée à équiper un véhicule et étant apte à prendre une première position dans laquelle le dispositif d'obturation (4, 4a, 4b) autorise le passage d'un flux d'air au travers de l'ensemble de face avant et une deuxième position dans laquelle le dispositif d'obturation (4, 4a, 4b) interdit le passage du flux d'air au travers de l'ensemble de face avant, le dispositif d'obturation (4, 4a, 4b) s'étendant majoritairement selon une direction longitudinale L, le dispositif d'obturation (4, 4a, 4b) comprenant au moins une ouverture (10), un guide de lumière (5) et une source lumineuse (6) s'étendant tous trois majoritairement selon ladite direction, le guide de lumière (5) étant au moins en partie logé dans l'ouverture (10).

## Description

La présente invention concerne le domaine des dispositifs de régulation thermique, et plus particulièrement un dispositif d'obturation pour un ensemble de face avant d'un véhicule, en particulier un véhicule automobile, destiné à être traversé par un flux d'air, le dispositif d'obturation étant apte à générer une fonction lumineuse.

Les véhicules, et notamment les véhicules automobiles, sont couramment équipés d'un dispositif apte à être traversé par un flux d'air. Ce flux d'air traverse classiquement un ensemble de face avant pouvant comporter un échangeur de chaleur de face avant, tel qu'un condenseur d'un système de climatisation et/ou un radiateur d'un système de refroidissement.

De tels dispositifs de régulation thermique peuvent comprendre des systèmes de contrôle de ce flux d'air tels que des dispositifs d'obturation comportant des volets, communément désignés par l'acronyme anglais AGS pour *«Active Grille Shutter».* Ils permettent d'adapter le flux d'air traversant l'ensemble de face avant aux besoins de l'échangeur de chaleur de face avant, ce qui permet d'augmenter le coefficient de pénétration dans l'air quand l'échangeur de chaleur ne nécessite pas d'être refroidi par le flux d'air. *Infine,* l'emploi de ces volets permet de réduire la consommation de carburant et corrélativement la pollution émise par le véhicule.

Une telle adaptation consiste en une configuration ouverte des volets dans laquelle la circulation du flux d'air depuis l'extérieur et en direction de l'échangeur de chaleur est autorisée et une configuration fermée dans laquelle cette circulation du flux d'air est empêchée, ce qui permet notamment de réduire la traînée aérodynamique du véhicule.

Il est par ailleurs connu de modifier l'esthétisme de l'ensemble de face avant au moyen de sources lumineuses disposées au voisinage des systèmes de régulation. Cependant, ces sources lumineuses sont généralement positionnées derrière les volets, ce qui les prive de fonction lorsque les volets sont fermés. Par ailleurs, leur disposition derrière les volets augmente significativement l'encombrement de l'ensemble de face avant.

La présente invention vise à pallier au moins ces inconvénients en proposant un moyen d'améliorer l'esthétisme de l'ensemble de face avant du véhicule tout en limitant l'encombrement de ce dernier.

La présente invention a ainsi pour objet un dispositif d'obturation pour un ensemble de face avant destinée à équiper un véhicule, ledit dispositif d'obturation étant apte à prendre une première position dans laquelle le dispositif d'obturation autorise le passage d'un flux d'air au travers de l'ensemble de face avant et une deuxième position dans laquelle le dispositif d'obturation interdit le passage du flux d'air au travers de l'ensemble de face avant, le dispositif d'obturation s'étendant majoritairement selon une direction longitudinale, le dispositif d'obturation comprenant au moins une ouverture, un guide de lumière et une source lumineuse s'étendant tous trois majoritairement selon ladite direction, le guide de lumière étant au moins en partie logé dans l'ouverture.

Le dispositif d'obturation est par exemple un volet amovible, susceptible de prendre au moins deux positions, situées angulairement à 90° l'une de l'autre. Un tel dispositif d'obturation est globalement rectangulaire et il tourne autour d'un axe de rotation qui est parallèle à la l'extension majoritaire du dispositif d'obturation, c'est-à-dire son extension longitudinal.

Le guide de lumière est configuré pour diriger les rayons lumineux émis par la source lumineuse à travers l'ouverture ménagée dans le dispositif d'obturation.

Selon un exemple, une direction d'extension majoritaire du dispositif d'obturation est horizontale. Dans un tel cas, le dispositif d'obturation est disposé à plat.

Selon un autre exemple, une direction d'extension majoritaire du dispositif d'obturation est verticale. Dans un tel cas, le dispositif d'obturation est disposé debout.

Grâce à ce montage, la lumière est visible quand le dispositif d'obturation est fermé. L'encombrement de l'ensemble de face avant comportant le dispositif d'obturation est par ailleurs réduit car la source lumineuse et le guide font partie du dispositif d'obturation.

Selon une caractéristique optionnelle de l'invention, la source lumineuse comprend au moins une carte de circuit imprimé et une série de diodes électroluminescentes portées par la carte de circuit imprimé et alignées le long de la direction longitudinale du dispositif d'obturation.

Selon un aspect intéressant, les diodes électroluminescentes sont pilotables sélectivement les unes par rapport aux autres. Ceci permet de faire apparaître des scenarii d'éclairage divers et variés.

Selon une autre caractéristique optionnelle de l'invention, le dispositif d'obturation comprend au moins une première portion d'obturation et une deuxième portion d'obturation qui bordent l'ouverture et qui s'étendent dans des plans parallèles et distincts.

On comprend ici que le dispositif d'obturation présente deux parois éloignées l'une de l'autre, selon l'épaisseur du dispositif. La zone qui sépare ces deux parois constitue l'ouverture, cette dernière étant rectiligne selon une direction parallèle à la direction longitudinale du dispositif d'obturation.

Selon encore une autre caractéristique optionnelle de l'invention, le guide de lumière comprend au moins une face d'entrée des rayons lumineux émis par la source lumineuse et une face de sortie desdits rayons lumineux, la face de sortie desdits rayons lumineux s'étendant entre la première portion d'obturation et la deuxième portion d'obturation.

En d'autres termes, la face de sortie des rayons lumineux du guide de lumière joint la première portion d'obturation et la deuxième portion d'obturation. Selon d'autres mots, cette face de sortie des rayons lumineux prolonge une face extérieure de chaque portion d'obturation.

Selon un exemple de réalisation, la face de sortie des rayons lumineux est courbée, vue en section. Une telle structure permet de répartir angulairement les rayons lumineux qui sortent de la face de sortie des rayons lumineux.

Selon une caractéristique optionnelle de l'invention, la face d'entrée des rayons lumineux est plate. Cette face d'entrée des rayons lumineux est immédiatement disposée en face de la source lumineuse, de sorte que la direction des rayons lumineux qui entrent dans le guide de lumière n'est pas modifiée.

Selon une autre caractéristique optionnelle de l'invention, la face d'entrée des rayons lumineux s'étend dans un plan parallèle à l'une et/ou l'autre des portions d'obturation qui bordent l'ouverture. L'encombrement du dispositif d'obturation et donc de l'ensemble de face avant le comprenant est ainsi réduit au strict minimum.

Selon encore une caractéristique optionnelle de l'invention, le guide de lumière comprend un pied de maintien disposé entre l'une des portions d'obturation qui borde l'ouverture et un capot solidaire du dispositif d'obturation.

Un tel pied participe au maintien mécanique du guide de lumière par rapport aux portions d'obturation du dispositif d'obturation.

Le capot est par exemple une plaque disposée à l'arrière du dispositif d'obturation, le guide de lumière et la source lumineuse étant alors interposés entre cette plaque et l'une des portions d'obturation du dispositif d'obturation. Ce capot est rendu solidaire du dispositif d'obturation par tout moyen tel que l'emploi de vis, de rivet, le collage, le soudage ou le bouterollage.

Selon encore une autre caractéristique optionnelle de l'invention, le dispositif d'obturation comprend deux ouvertures et deux guides de lumière disposés symétriquement par rapport à un plan médian du dispositif d'obturation, chacun des guides de lumière étant au moins en partie logé dans l'une des ouvertures. Le plan médian est par exemple horizontal si la direction d'extension majoritaire du dispositif d'obturation est horizontale. Selon un autre exemple, le plan médian est vertical si la direction d'extension majoritaire du dispositif d'obturation est verticale.

Quand le dispositif d'obturation comprend exclusivement deux guides de lumière et deux ouvertures, ces deux guides de lumière sont en appui contre une même portion d'obturation qui borde ces deux ouvertures.

L'invention concerne aussi un ensemble de face avant comprenant un châssis qui forme un encadrement à l'égard du ou des dispositifs d'obturation tel que précédemment décrits. Quand celui-ci ou ceux-ci sont ouverts, c'est à l'intérieur de cet encadrement que le flux d'air circule.

Selon une caractéristique optionnelle de l'invention, le passage du dispositif d'obturation de l'une de ses positions à l'autre est effectué par une rotation du dispositif d'obturation autour d'un axe de rotation parallèle à la direction longitudinale du dispositif d'obturation.

Selon une autre caractéristique optionnelle de l'invention, l'ensemble de face comprend une pluralité de dispositifs d'obturation disposés cote-à-côte et venant en appui deux-à-deux l'un sur l'autre lorsque les dispositifs d'obturation sont placés dans leur deuxième position. On comprend ici que le châssis ne comporte pas de barreau contre lequel deux dispositifs d'obturation sont en appui. Au contraire, deux dispositifs d'obturation immédiatement adjacents se touchent lorsqu'ils sont dans leur position fermée.

La zone qui sépare deux dispositifs d'obturation adjacents qui sont ouverts est un espace de circulation du flux d'air, un tel espace étant obstrué conjointement par deux dispositifs d'obturation adjacents. Dans la deuxième position de deux dispositifs d'obturation adjacents, une portion de chacun desdits dispositifs d'obturation vient au contact l'une de l'autre de sorte à interdire le passage du flux d'air à travers l'espace de circulation.

Selon un exemple de réalisation de l'ensemble de face avant, les dispositifs d'obturation sont pilotables sélectivement. Dit autrement, l'ensemble est configuré pour qu'un des dispositifs d'obturation soit ouvert quand un autre est fermé. Ceci permet d'adapter le débit de flux d'air extérieur aux besoins de refroidissement de l'échangeur de chaleur de face avant, tout en conservant au moins en partie l'effet sur le coefficient de pénétration dans l'air.

Selon un mode de réalisation de l'invention, l'ensemble de face avant comprend un module lumineux porté par le châssis et configuré pour émettre des rayons lumineux au moins en direction du dispositif d'obturation. Un tel module lumineux est un organe lumineux additionnel par rapport à la ou les sources lumineuses portées par le dispositif d'obturation. Ce module lumineux permet de d'éclairer la face extérieure du dispositif d'obturation.

Selon ce mode de réalisation, le module lumineux comprend au moins une première barre lumineuse et une deuxième barre lumineuse disposées de part et d'autre du dispositif d'obturation, éventuellement des dispositifs d'obturation.

Selon un exemple, la première barre lumineuse est verticalement au-dessus du dispositif d'obturation, tandis que la deuxième barre lumineuse est verticalement en-dessous du dispositif d'obturation.

Selon un autre exemple alternatif ou complémentaire, la première barre lumineuse est latéralement à gauche du dispositif d'obturation, tandis que la deuxième barre lumineuse est latéralement à droite du dispositif d'obturation.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une vue de face et en perspective de l'ensemble de face avant selon l'invention ;
[fig 2] est un éclaté d'un dispositif d'obturation de la figure 1 ;
[fig 3] est une vue de deux dispositifs d'obturations illustrés sur la figure 1, vus selon une coupe 17 illustrée sur la figure 2 et dans une position fermée ;
[fig 4] est une vue de deux dispositifs d'obturations illustrés sur la figure 3, vus selon une coupe 17 illustrée sur la figure 2 et dans une position ouverte.

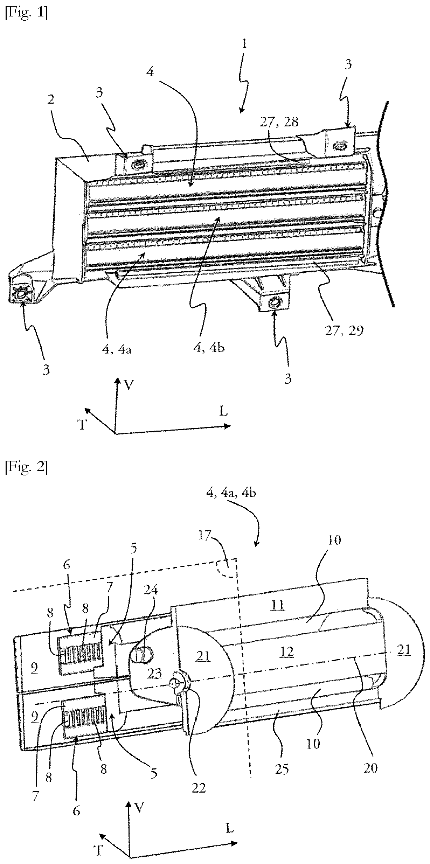

La figure 1 représente une partie d'un ensemble de face avant 1. Plus précisément, la partie de l'ensemble de face avant 1 visible sur la figure 1 est une moitié gauche de l'ensemble de face avant. Cet ensemble de face avant 1 étant de conception symétrique, il comprend aussi une moitié droite identique à la moitié gauche. La description ci-dessous réalisée à l'égard de la moitié gauche est bien entendu transposable à la moitié droite de l'ensemble de face avant.

Un tel ensemble de face avant 1 comprend un châssis 2 qui forme un cadre périphérique de l'ensemble de face avant 1. Un tel châssis est la pièce qui porte l'ensemble des composants de l'ensemble de face avant 1. C'est également par cette pièce que l'ensemble de face avant est rendu solidaire d'un véhicule, par exemple un véhicule automobile.

C'est à cet effet que le châssis 2 comprend des moyens de fixation 3 dont le rôle est de relier l'ensemble de face avant à la face avant dudit véhicule. Selon l'exemple de la figure 1, un moyen de fixation 3 prend la forme d'une patte de fixation pourvue d'un trou et qui fait saillie du cadre.

L'ensemble de face avant 1 comprend également au moins un dispositif d'obturation 4 du flux d'air qui passe au travers de l'ensemble de face avant 1. Dans le cas d'espèce, la partie d'ensemble de face 1 avant comprend trois dispositifs d'obturation 4 qui sont portées par le châssis 2.

Chaque dispositif d'obturation 4 est apte à prendre une première position, ou position ouverte, dans laquelle il autorise le passage d'un flux d'air au travers de l'ensemble de face avant 1, et une deuxième position, ou position fermée, dans laquelle il interdit le passage du flux d'air au travers de l'ensemble de face avant 1.

Le châssis 2 de l'ensemble de face avant 1 porte au moins un module lumineux 27 qui est disposé de sorte éclairer une partie extérieure du dispositif d'obturation 4, c'est-à-dire une partie qui reçoit le flux d'air extérieur quand le dispositif d'obturation est en position fermée, c'est-à-dire dans sa deuxième position.

Un tel module lumineux 27 participe à la mise en oeuvre de scenarii lumineux que l'ensemble de face avant peut réaliser. Selon un exemple, le module lumineux 27 comprend une première barre lumineuse 28 et une deuxième barre lumineuse 29 disposées de part et d'autre du dispositif d'obturation 4, et plus globalement de part et d'autre de la pluralité de dispositifs d'obturation 4a, 4b, quand l'ensemble de face avant 1 en est pourvu. Ces barres lumineuses 27, 28 sont constituées de diodes électroluminescentes, de couleurs variées et dont l'intensité lumineuse peut être adaptée.

Selon un exemple, la première barre lumineuse 28 est solidaire du châssis 2 en étant fixée verticalement au-dessus du dispositif d'obturation 4, 4a, 4b et la deuxième bande lumineuse 29 est fixée sur le châssis, en étant verticalement en-dessous du ou des dispositifs d'obturation 4, 4a, 4b. Bien entendu, une disposition à droite ou à gauche de cet ou de ces dispositifs d'obturation 4, 4a, 4b entre dans la portée de l'invention.

Dans la description qui va suivre, il est acquis que toute description d'un aspect technique faite à l'égard d'un seul dispositif d'obturation est transposable à un autre dispositif d'obturation, voire à tous les dispositifs d'obturation 4 de l'ensemble de face avant 1 selon l'invention.

Selon l'exemple de la figure 1, le dispositif d'obturation 4 s'étend majoritairement le long d'une direction longitudinale L, lisible sur un repère orthonormé L, V, T montré sur la figure 1. Cette direction d'extension majoritaire L est ici horizontale, si bien que le dispositif d'obturation 4 est globalement disposé à plat. On note que cette disposition n'est pas limitative et que la direction d'extension majoritaire peut aussi être verticale, et dans un tel cas, le dispositif d'obturation est globalement dressé verticalement.

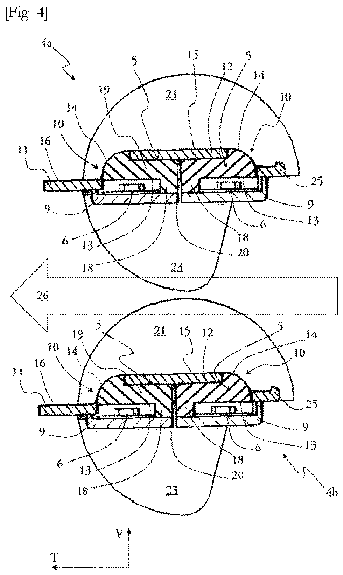

Quelle que soit sa position, ce dispositif d'obturation 4 est susceptible de prendre deux positions extrêmes, et une multitude de positions intermédiaires, en suivant une rotation autour d'un axe de rotation 20. Une position extrême est une première position dans laquelle le dispositif d'obturation 4 autorise le passage d'un flux d'air au travers de l'ensemble de face avant 1. Cette première position est illustrée par la figure 4.

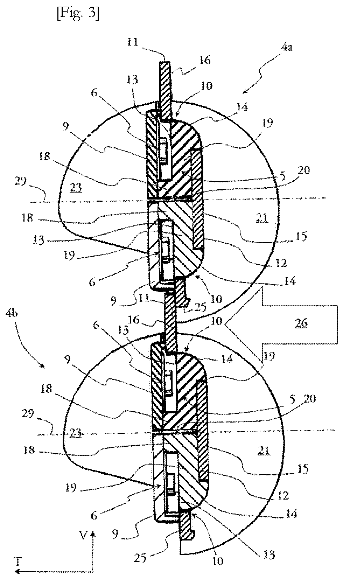

Une autre position extrême est une deuxième position dans laquelle le dispositif d'obturation 4 interdit le passage du flux d'air au travers de l'ensemble de face avant 1. La figure 1 et la figure 3 illustrent le dispositif d'obturation 4 lorsqu'il est dans sa deuxième position.

La figure 2 montre en détail les pièces qui composent le dispositif d'obturation 4. Ce dernier comprend au moins un guide de lumière 5 et une source lumineuse 6. Dans l'exemple illustré ici, le dispositif d'obturation 4 comprend deux guides de lumière 5 montés tête bêche, et deux sources lumineuses 6.

Selon l'invention, le guide de lumière 5 et la source lumineuse 6 s'étendent tous deux le long de la direction longitudinale du dispositif d'obturation 4, c'est-à-dire sa direction d'extension majoritaire. Le guide de lumière 5 et la source lumineuse 6 prennent une forme de barreau étendu parallèlement à la direction longitudinale L.

La source lumineuse 5 comprend au moins une carte de carte de circuit imprimé 7 sur laquelle est fixée une série de diodes électroluminescentes 8. Une source lumineuse 5 comprend ainsi plusieurs diodes électroluminescentes 8 qui peuvent s'allumer et s'éteindre simultanément ou sélectivement, en fonction du choix de scénario d'éclairage.

Les diodes électroluminescentes 8 sont disposées les unes après les autres sur une ligne virtuelle qui est parallèle à la direction longitudinale L. De telles diodes électroluminescentes 8 peuvent émettre une lumière blanche ou une lumière rouge, verte ou bleue, et l'intensité du rayonnement lumineux de chacune des diodes électroluminescentes 8 peut être contrôlée individuellement.

La source lumineuse 6 est portée par un capot 9 constitutif du dispositif d'obturation 4. Dans le cas d'espèce, le dispositif d'obturation 4 comprend deux capots 9 qui chacun porte une source lumineuse 6. La carte de circuit imprimé 7 est par exemple collée à ce capot 9 et ce dernier vient fermer une partie arrière du dispositif d'obturation 4.

Selon l'invention, le dispositif d'obturation 4 comprend au moins une ouverture 10 qui s'étend sensiblement parallèlement à la direction longitudinale L du dispositif d'obturation 4. Une telle ouverture 10 prend la forme d'une fente ménagée dans une paroi de blocage du dispositif d'obturation 4. Selon l'exemple de la figure 1, le dispositif d'obstruction 4 comprend deux ouvertures 10.

Le dispositif d'obturation 4 comprend une première portion d'obturation 11 et une deuxième portion d'obturation 12. Ces deux portions bordent l'ouverture 10, en s'étendant le long de celle-ci. Ces portions sont les parties du dispositif d'obturation 4 qui bloquent le passage du flux d'air au travers de l'ensemble de face avant selon l'invention.

Selon un exemple, cette première portion d'obturation 11 et cette deuxième portion d'obturation 12 sont plates. Elles s'inscrivent chacune dans un plan, ces deux plans étant ici parallèles et distincts. Cette première portion d'obturation 11 et cette deuxième portion d'obturation 12 forment des bandeaux décalés dans la direction transversale T et dans la direction verticale V, entre lesquels l'ouverture 10 est ménagée.

Selon l'invention et comme on peut le voir sur les figures 3 ou 4, le guide de lumière 5 s'étend au moins en partie dans l'ouverture 10. On garantit ainsi que les rayons lumineux sortent au niveau du dispositif d'obturation 4, même quand ce dernier est dans sa deuxième position, c'est-à-dire fermé. De manière avantageuse, toute l'ouverture 10 est occupée par le guide de lumière 5, tant longitudinalement que verticalement.

Tel que visible sur les figures 3 et 4, le guide de lumière 5 comprend une face d'entrée 13 des rayons lumineux qui proviennent de la source lumineuse 6 et une face de sortie 14 par laquelle les rayons lumineux entrés par la face d'entrée 13 sortent du guide de lumière 5. La face d'entrée 13 des rayons lumineux est globalement plate et s'étend dans un plan parallèle au plan dans lequel s'inscrit la première portion d'obturation 11 ou la deuxième portion d'obturation 12. La source lumineuse 6 est installée au droit de cette face d'entrée 13 des rayons lumineux.

La face de sortie 14 des rayons lumineux suit un profil courbé, vue selon la coupe visible sur la figure 3 ou sur la figure 4. Cette face de sortie 14 des rayons lumineux joint une face extérieure 15 de la deuxième portion d'obturation 12 à une face extérieure 16 de la première portion d'obturation 11.

Le guide de lumière 5 comprend également un pied de maintien 18 qui est pris en sandwich entre le capot 9 et la deuxième portion d'obturation 12. Le guide de lumière 5 comprend aussi un corps 19 qui, d'un côté, fait saillie du pied de maintien 18 et de l'autre se termine par la face de sortie 14 des rayons lumineux. Ce corps 19 est délimité d'un côté par la face d'entrée 13 des rayons lumineux et il comprend, de l'autre côté, un dégagement dans lequel se place la deuxième portion d'obturation 12. La face de sortie 14 des rayons lumineux et le pied de maintien 18 sont à deux extrémités opposées du corps 19.

Le trajet des rayons lumineux est le suivant : les rayons lumineux provenant de la source lumineuse 6 entrent dans le guide de lumière 5 par la face d'entrée 13, sans changement de direction. Ces rayons lumineux se déplacent au sein du corps 19 par réflexion totale, et atteignent la face de sortie 14, où les rayons lumineux sont éclatés dans un secteur angulaire correspondant au secteur angulaire de la courbe que la face de sortie 14 prend.

Le capot 19, la première portion d'obturation 11, la face d'entrée 13 des rayons lumineux et le pied de maintien 18 délimitent une cavité où les rayons lumineux ne peuvent s'échapper que par la face d'entrée 13 des rayons lumineux.

Lorsque le dispositif d'obturation 4 comprend seulement deux guides de lumière 5, ces deux guides de lumière 5 sont installés tête bêche, en étant séparés l'un de l'autre par une lame d'air, pour éviter une transmission de rayons lumineux entre deux guides de lumière 5. Ces deux guides de lumière 5 sont ainsi disposés de manière symétrique par rapport à un plan médian 29 et dans lequel s'inscrit la direction longitudinale L et la direction transversale T du repère orthonormé.

Les deux guides de lumière 5 sont tous deux en appui contre la même deuxième portion d'obstruction 12. En d'autres termes, une seule et unique deuxième portion d'obstruction 12 délimite deux ouvertures 10, une première ouverture 10 étant comblée par un premier guide de lumière 5 et une deuxième ouverture 10 étant comblée par un deuxième guide de lumière 5, distinct du premier guide de lumière. De la sorte, le dispositif d'obturation 4 émet des rayons lumineux de part et d'autre de son axe de rotation, mais d'un même côté des portions d'obturation 11 et 12.

La figure 2, la figure 3 et la figure 4 montrent aussi la présence de deux flasques 21 qui délimitent longitudinalement le dispositif d'obturation 4. Ces flasques 21 prennent une forme générale de demi-disque et servent à guider la rotation du dispositif d'obturation 4, par contact du flasque sur le châssis 2 de l'ensemble de face avant 1.

Sur la figure 2, on constate la présence d'un palier de rotation 22 du dispositif d'obturation 4. Ce dernier comprend également un bras de levier 23 et un levier 24 qui servent à transmettre un effort pour faire passer le dispositif d'obturation de sa première position à sa deuxième position, et vice-versa.

Sur les figures 2 à 4, on note que le dispositif d'obturation 4 comprend une languette 25 qui forme une bande rectiligne et plate, qui s'inscrit dans un plan parallèle au plan dans lequel s'inscrit la première portion d'obturation 11 ou la deuxième portion d'obturation 12.

Le plan de cette languette 25 est par exemple distinct des plans de la première portion d'obturation 11 ou la deuxième portion d'obturation 12, en étant par exemple intercalé transversalement entre ces deux plans. Dans une telle situation, le capot 9 qui est au contact de la languette 25 comprend un retour qui ferme la cavité où les rayons lumineux sont contenus.

Sur la figure 3 qui montre un premier dispositif d'obturation 4a et un deuxième dispositif d'obturation 4b disposés l'un à côté de l'autre et dans leur deuxième position, on constate que la première portion d'obturation 11 du deuxième dispositif d'obturation 4b vient en appui contre la languette 25 du premier dispositif d'obturation 4a.

La première portion d'obturation 11 du premier dispositif d'obturation 4a s'étend dans un plan qui est confondu avec un plan dans lequel s'étend la première portion d'obturation 11 du deuxième dispositif d'obturation 4b. Il est de même pour les deuxièmes portions d'obturation 12 et les languettes 25. C'est ainsi que les dispositifs d'obturation 4a, 4b sont disposés quand il convient d'interdire le passage d'un flux d'air 26 au travers de l'ensemble de face avant 1 selon l'invention. L'étanchéité au flux d'air 26 est réalisée par une mise en contact d'un dispositif d'obturation 4 contre l'autre.

La figure 4 montre le premier dispositif d'obturation 4a et le deuxième dispositif d'obturation 4b disposés l'un à côté de l'autre et dans leur première position, c'est-à-dire autorisant une circulation du flux d'air 26 au travers de l'ensemble de face avant 1 selon l'invention. Par rapport à la figure 3, les dispositifs d'obturation 4a et 4b ont été tournés de 90°, ou sensiblement 90°, dans le sens anti-horaire. La première portion d'obturation 11 du premier dispositif d'obturation 4a s'étend dans un plan qui est distinct et avantageusement parallèle avec un plan dans lequel s'étend la première portion d'obturation 11 du deuxième dispositif d'obturation 4b. Il est de même pour les deuxièmes portions d'obturation 12 et les languettes 25.

La présente invention atteint bien les objectifs fixés en proposant un ensemble de face avant capable de contrôler le flux d'air passant à son travers tout permettant la mise en oeuvre de différents scenarii lumineux, le tout dans un encombrement particulièrement restreint.

## Revendications

1. Dispositif d'obturation (4, 4a, 4b) pour un ensemble de face avant (1) destinée à équiper un véhicule, ledit dispositif d'obturation (4, 4a, 4b) étant apte à prendre une première position dans laquelle le dispositif d'obturation (4, 4a, 4b) autorise le passage d'un flux d'air (26) au travers de l'ensemble de face avant (1) et une deuxième position dans laquelle le dispositif d'obturation (4, 4a, 4b) interdit le passage du flux d'air (26) au travers de l'ensemble de face avant (1), le dispositif d'obturation (4, 4a, 4b) s'étendant majoritairement selon une direction longitudinale L, le dispositif d'obturation (4, 4a, 4b) comprenant au moins une ouverture (10), un guide de lumière (5) et une source lumineuse (6) s'étendant tous trois majoritairement selon ladite direction, le guide de lumière (5) étant au moins en partie logé dans l'ouverture (10).

2. Dispositif d'obturation (4, 4a, 4b) selon la revendication 1, dans lequel la source lumineuse (6) comprend au moins une carte de circuit imprimé (7) et une série de diodes électroluminescentes (8) portées par la carte de circuit imprimé et alignées le long de la direction longitudinale L du dispositif d'obturation (4, 4a, 4b).

3. Dispositif d'obturation (4, 4a, 4b) selon l'une quelconque des revendications précédentes, dans lequel le dispositif d'obturation (4, 4a, 4b) comprend au moins une première portion d'obturation (11) et une deuxième portion d'obturation (12) qui bordent l'ouverture (10) et qui s'étendent dans des plans parallèles et distincts et dans lequel le guide de lumière (5) comprend au moins une face d'entrée (13) des rayons lumineux émis par la source lumineuse (6) et une face de sortie (14) desdits rayons lumineux, la face de sortie (14) desdits rayons lumineux s'étendant entre la première portion d'obturation (11) et la deuxième portion d'obturation (12).

4. Dispositif d'obturation (4, 4a, 4b) selon la revendication précédente, dans lequel la face de sortie (14) est courbée, vue en section.

5. Dispositif d'obturation (4, 4a, 4b) selon la revendication 3, dans lequel la face d'entrée (13) des rayons lumineux s'étend dans un plan parallèle à l'une et/ou l'autre des portions d'obturation (11, 12) qui bordent l'ouverture (10).

6. Dispositif d'obturation (4, 4a, 4b) selon l'une quelconque des revendications précédentes combinée à la revendication 3, dans lequel le guide de lumière (5) comprend un pied de maintien (18) disposé entre l'une des portions d'obturation (11, 12) qui borde l'ouverture (10) et un capot (9) solidaire du dispositif d'obturation (4, 4a, 4b).

7. Dispositif d'obturation (4, 4a, 4b) selon l'une quelconque des revendications précédentes, dans lequel le dispositif d'obturation (4, 4a, 4b) comprend deux ouvertures (10) et deux guides de lumière (5) disposés symétriquement par rapport à un plan médian du dispositif d'obturation (4, 4a, 4b), chacun des guides de lumière (5) étant au moins en partie logé dans l'une des ouvertures (10).

8. Dispositif d'obturation (4, 4a, 4b) selon la revendication précédente combinée à la revendication 3, dans lequel les deux guides de lumière (5) sont en appui contre une même portion d'obturation (12) qui borde deux ouvertures (10).

9. Ensemble de face avant (1) comportant un dispositif d'obturation (4, 4a, 4b) selon l'une quelconque des revendications précédentes et comprenant au moins un châssis (2) porteur du dispositif d'obturation (4, 4a, 4b) et comportant un module lumineux (27) porté par le châssis (2) et configuré pour émettre des rayons lumineux au moins en direction du dispositif d'obturation (4, 4a, 4b).

10. Ensemble de face avant (1) selon la revendication précédente, dans lequel le module lumineux (27) comprend au moins une première barre lumineuse (28) et une deuxième barre lumineuse (29) disposées de part et d'autre du dispositif d'obturation (4, 4a, 4b).
